# EUROPÄISCHE PATENTSCHRIFT

(11) **EP 1 108 911 B1**
(45) Veröffentlichungstag und Bekanntmachung des Hinweises auf die Patenterteilung: **29.10.2003**
(21) Anmeldenummer: 00126275.7
(22) Anmeldetag: 01.12.2000
(51) Int. Cl.: F16D 3/68, F16D 3/78

(54) **Elastische Kupplung, insbesondere Lagerpaket-Gelenkkupplung**
Flexible coupling, especially multilayer joint coupling
Accouplement élastique, en particulier accouplement articulé multicouche

(30) Priorität: 03.12.1999 DE 19958367
(43) Veröffentlichungstag der Anmeldung: 20.06.2001
(73) Patentinhaber: Voith Turbo GmbH & Co. KG, 89522 Heidenheim (DE)
(72) Erfinder: Schild, Dieter, 45481 Mühlheim (DE); Tilscher, Martin, Dr., 89522 Heidenheim (DE)
(74) Vertreter: Dr. Weitzel & Partner

(56) Entgegenhaltungen:
- EP-A- 0 534 899
- DE-B- 1 095 595
- GB-A- 1 028 352
- GB-A- 2 096 739

## Beschreibung

Die Erfindung betrifft eine elastische Kupplung, insbesondere eine Lagerpaket-Gelenkkupplung, im einzelnen mit den Merkmalen aus dem Oberbegriff des Anspruchs 1.

Elastische Lagerpaket-Gelenkkupplungen umfassen wenigstens eine Kupplungsebene, denkbar sind jedoch auch Ausführungen mit zwei Kupplungsebenen. Bei letzteren handelt es sich um sogenannte kardanische Kupplungen, welche zur Verbindung zwischen einer Hohlwelle und einer sich durch diese erstreckende Achswelle dienen. Eine derartige Kupplung ist beispielsweise aus der Druckschrift EP 0 152 568 B1 bekannt. Die Verbindung der Achswelle mit der Hohlwelle, in diesem Fall der Hohlwelle eines Getriebes erfolgt dabei über eine Achsnabe mit vier- oder mehrsternförmigen Armen. Über elastische Lagerpakete, insbesondere Gummilagerpakete wird die Verbindung zur Kardanhohlwelle, welche als eine, die Achswelle hohlwellenartig umschließende Welle ausgeführt ist, hergestellt. Diese Kardanhohlwelle wiederum ist über Gummi-Lagerpakete mit dem Hohlwellenstern einer Hohlwellennabe mit vier- oder mehrsternförmigen Armen, die am Hohlwellenende eines Getriebes angeschraubt ist, verbunden. Die erforderliche kardanische Beweglichkeit wird dabei dadurch erzielt, daß zwischen den Außenflächen der Kupplung zwei Gelenkebenen hintereinander geschaltet sind. Daher besteht jede Kupplungsebene aus einzelnen, gleichmäßig auf den Umfang der Kupplung angeordneten elastischen Lagerpaketen, die mit ihrem Mitteilteil an die Kardanhohlwelle und den Außenhälften der Hohlwelle beziehungsweise Achswelle angepaßte Naben und von diesen sternförmig ausgehende Arme aufweisen, die in Umfangsrichtung beiderseits durch an vorgenannte Gummipakete anvulkanisierte Endstücke eingeschlossen sind. Die Vorspannungswege, Einbaulage und die Gummipaketfedercharakteristik werden dabei so aufeinander abgestimmt, daß die Summe aller Kräfte im eingebauten Zustand Null ist. Es verbleibt damit keine umlaufende Restkraft, welche zu einer Unwucht führen könnte.

Bei Ausführungen der elastischen Kupplung in Form einer Lagerpaket-Gelenkkupplung mit einer Kupplungsebene umfaßt diese ein erstes Kupplungselement und ein zweites Kupplungselement, wobei diese über die elastischen Lagerpakete, welche wenigstens einem der Kupplungselemente zugeordnet sind, reibschlüssig verbunden sind. Die Lagerpakete können dabei einem der beiden Kupplungselemente zugeordnet sein, wobei dabei unerheblich ist, ob das Kupplungselement mit der Antriebsseite oder der Abtriebsseite beim Einsatz in einem Antriebstrang verbunden ist. Die elastischen Lagerpakete sind vorzugsweise in Form von Gummi-Lagerpaketen ausgeführt, wobei diese einen Mittelteil aufweisen, welchem beidseitig sogenannte Gummiblöcke zugeordnet sind. Die Lagerpakete sind dabei zwischen den sich von einem Nabenteil in radialer Richtung in gleichmäßigem Abstand zueinander erstreckenden Armen eines der beiden Kupplungselemente unter Vorspannung eingesetzt. Die Lagerpakete weisen dazu in Umfangsrichtung betrachtet im wesentlichen eine Kreissegmentform auf und umfassen ein Mittelteil, dem beidseitig Gummiblöcke zugeordnet sind. Die einzelnen Gummiblöcke sind dabei am Mittelteil anvulkanisiert und umfassen jeweils eine Mehrzahl von gummiartigen Elementen, die ebenfalls aneinander anvulkanisiert sind und deren vom Mitteilteil wegweisenden Endflächen durch plattenförmige Elemente abgeschlossen werden. Dabei können die Vulkanisationsflächen des Mittelteils und der plattenförmigen Elemente stets in einer in radialer Richtung von der Kupplungsachse ausgehend betrachtet verlaufenden Ebene, welche u.a. durch die Kuppplungsachse mit beschreibbar ist, liegen, wobei die einzelnen plattenförmigen Elemente sowohl parallel zu den Vulkanisationsflächen verlaufen können oder aber mit einer bestimmten Neigung, so daß sich die Vulkanisationsflächen als auch die Ebene der plattenförmigen Elemente in der Kupplungsachse schneiden. In diesem Fall wären dabei die einzelnen gummiartigen Elemente keilförmig ausgebildet. Die plattenförmigen Elemente, welche die Lagerblöcke abschließen, sind dabei mit den Armen des entsprechenden Kupplungselementes verbindbar.

Eine gattungsgemäße elastische Lagerpaket-Gelenkkupplung ist aus der Druckschrift DE 38 43 496 C1 bekannt. Auch dieser dient der Verbindung zweier Maschinenteile, insbesondere Wellen und umfaßt eine erste Kupplungshälfte und eine über Gummielemente mit dieser verbundene zweite Kupplungshälfte, wobei mehrere von der ersten Kupplungshälfte sich radial nach außen erstreckende Arme und von der anderen zweiten Kupplungshälfte ebenfalls so viel, daß sich radial nach außen streckende Arme in Umfangsrichtung abwechselnd hintereinander angeordnet sind, zwischen denen die Gummielemente unter Vorspannung eingebracht sind, die angekrümmten Flächen der Arme anlegen und von auf den Armen befestigten Haltestücken radial gehalten sind. Jedes Gummielement besteht aus mindestens zwei zischen zwei äußeren Metallteilen einvulkanisierten Gummiteilen mit mindestens einem dazwischen einvulkanisierten inneren Metallteil. Die Anlage an den Armen erfolgt dabei über die äußeren Metallteile. Die einander zugewendeten Anlageflächen zweier benachbarter Arme sind in Achsrichtung der Kupplung entgegengesetzt konvex gekrümmt. Die Anlageflächen jedes Gummielementes bzw. der äußeren Metallteile sind entgegengesetzt konkav gekrümmt. Die Gummiteile eines Gummielementes sind in Rotationsrichtung der Kupplung betrachtet in der Mitte mit einem geringeren Querschnitt als in den Randbereichen ausgeführt. Um eine größere Verlagerung der beiden miteinander zu koppelnden Maschinenelemente, die jeweils mit dem ersten und zweiten Ordnungselement verbunden sind, zu gewährleisten werden die Gummiteile mit unterschiedlichen Dicken ausgestaltet, wobei die größte Dicke jeweils in den kritischen Außenbereichen vorhanden ist. Die Funktion des Mittelteiles wird hier von einem Spannkreis 46 gebildet, der auf die als Leisten ausgeführten Verbindungselemente an den beiden Kupplungsteilen aufgesetzt wird und mit Schrauben an diesem befestigt wird. Die Spannteile haben dabei einen etwa haarförmigen Querschnitt mit um den Winkel β zueinander geneigten konvexen Flächen, die den Anlageflächen an den Armen entsprechen. Die untere Ausnehmung ist dabei derart auf die Breite der Verbindungsarme an den Kupplungsteilen abgestimmt, daß diese spielfrei von diesen aufgenommen werden. Die äußeren Metallteile umgreifen dabei mit zungenartigen Vorsprüngen partiell die Arme. Bei der Montage der Gummielemente ragen die Oberkannten der Zungen noch über die äußeren Flächen der Arme hinaus. Erst beim anziehen der Schrauben drücken die auf den Oberkannten aufliegenden Haltestücke die Gummielemente radial soweit in den kronischen Zwischenraum zwischen zwei benachbarten Armen, bis die Haltestücke auch aufsitzen. Infolge der zueinander geneigten Anlageflächen wird dabei die erforderliche Vorspannung in den Gummiteilen erzeugt. Ein Nachteil dieser Ausführung besteht im wesentlichen in einem sehr komplizierten Aufbau aus einer Vielzahl von Einzelelementen.

Eine weitere Ausführung einer elastischen Gelenkkupplung ist aus der Druckschrift DE 199 56 089 bekannt. Diese umfaßt zwei koaxiale Kupplungselemente mit scheibenförmigen Flanschen, welche zur Übertragung der jeweiligen Last Nocken aufweisen, die von den Flanschen axial hervorragen und sich in radialer Richtung erstrecken und in Umfangsrichtung abwechselnd mit dem Flansch des einen oder mit dem Flansch des anderen Kupplungselementes verbunden sind, wobei zwischen den Nocken Räume vorgesehen sind, die zur Aufnahme eines aus gummiartigen Material bestehenden Lastübertragungselementes bestimmt sind, daß einen Ringteil und eine entsprechende Anzahl von Druckstücken besitzt, die eine elliptische Form und rechteckigen Querschnitt haben und zwischen den Nocken der Kupplungsglieder eingefaßt sind.

Ein wesentlicher Nachteil der elastischen Kupplungen der eingangs genannten Art besteht dabei darin, daß die Dimensionierung abhängig vom einzelnen Gummipaket ist, welches auf die gleichzeitig vorliegenden Forderungen nach einer bestimmten Drehelastizität und Rückstellkraft abgestimmt ist. Ein weiterer Nachteil besteht jedoch darin, daß diese Kupplung bei Anwendungsfällen, welche hohe Drehzahlen erfordern, nur unbefriedigend arbeitet, da die einzelnen Elemente des Lagerpaketes unter Fliehkrafteinfluß eine Verschiebung in radialer Richtung zueinander erfahren, so daß unter Umständen die erforderlichen Momente nicht mehr übertragen werden können.

Der Erfindung liegt daher die Aufgabe zugrunde, eine elastische Kupplung der eingangs genannten Art mit wenigstens einer Kupplungsebene derart weiterzuentwickeln, daß diese auch den Anforderungen von Anwendungsfällen mit erforderlicher Leistungsübertragung bei hohen Drehzahlen und damit hohen Geschwindigkeiten gerecht werden, wobei die Leistungsübertragung immer vollständig gewährleistet ist und die elastische Kupplung sich durch eine hohe Verfügbarkeit auszeichnet.

Die erfindungsgemäße Lösung ist durch die Merkmale des Anspruchs 1 charakterisiert. Vorteilhafte Ausgestaltungen sind in den Unteransprüchen wiedergegeben.

Eine elastische Kupplung, insbesondere eine Lagerpaket-Gelenkkupplung, umfaßt ein erstes Kupplungselement und ein zweites Kupplungselement, wobei das erste oder das zweite Kupplungselement jeweils mit der An- oder Abtriebseite drehfest verbindbar ist. Das erste oder zweite Kupplungselement umfaßt dabei ein sternförmig gestaltetes Element, welches einen Nabenteil aufweist, über den die Verbindung zur An- oder Abtriebseite realisiert wird und von welchem sich in radialer Richtung armförmige Elemente in gleichem Abstand in Umfangsrichtung betrachtet erstrecken, auf. Zwischen zwei einander in Umfangsrichtung benachbarten armförmigen Elementen ist jeweils ein Lagerpaket unter Vorspannung angeordnet. Das elastische Lagerpaket umfaßt dabei einen Mittelteil, an welchem sich beidseitig elastische Lagerblöcke anschließen. Erfindungsgemäß sind das Mittelteil und die Lagerblöcke derart gestaltet, daß diese Elemente eine Selbstzentrierung gegeneinander erfahren. Das Mittelteil ist in einer Ansicht auf die Kupplungsebene, d. h. in axialer Richtung bezogen auf die Kupplungsachse in radialer Richtung zur Kupplungsachse hin betrachtet, im wesentlichen verjüngend ausgeführt. In Umfangsrichtung ist das Mittelteil in einer Ansicht auf die Kupplungsebene, d. h. in Achsrichtung jeweils in beide Richtungen mit einer unebenen Außenfläche ausgebildet an die sich die Lagerblöcke durch Anvulkanisieren anschließen. Vorzugsweise sind diese mit einer gewölbten Außenfläche ausgeführt, d. h. die Anlage- und Kontaktflächen sind in der Kupplungsebene, d. h. in Umfangsrichtung der Kupplung im Querschnitt betrachtet bzw. im Querschnitt betrachtet über deren radiale Ausdehnung durch wenigstens zwei unterschiedliche Richtungsvektoren beschreibbar. Mit anderen Worten, das Mittelteil ist in Umfangsrichtung weisend als Halbrundkörper ausgeführt. Das heißt, das die in Umfangsrichtung weisenden Flächen des Mittelteiles bogenförmig beziehungsweise gewölbt ausgeführt sind, wobei sich eine im wesentlichen konvexe Form des Mittelteiles ergibt. Andere bogenförmige Ausführungen sind ebenfalls denkbar. Entscheidend ist jedoch, daß die Ausführung der Kontur der Außenfläche des Mittelteiles, welche zum benachbarten Arm direkt hingewandt ist, in dieser Richtung gewölbt erfolgt. Die beidseitig des Mittelteiles angeordneten Lagerblöcke eines Lagerpaketes umfassen wenigstens zwei durch ein Zwischenelement voneinander getrennte gummiartige Elemente, die auch als Gummispuren bezeichnet werden und mit einem Endstück verbunden sind, wobei das Endstück am entsprechenden Arm durch eine lösbare Verbindung fixierbar ist und eine Aufnahmeeinrichtung für das gummiartige Element bildet. Dabei sind erfindungsgemäß wenigstens die mit der Aufnahmeeinrichtung in Wirkverbindung tretenden und am gummiartigen Element ausgeführten Flächen parallel zur in Umfangsrichtung zum Arm direkt hinweisenden Fläche des Mittelteiles oder der zum Mittelteil hingewandten Fläche des Aufnahmeelementes ausgeführt. Ein Lagerblock umfaßt jedoch eine Mehrzahl von gummiartigen Elementen, welche über entsprechende Zwischenelemente voneinander getrennt sind, wobei die Verbindung zwischen den einzelnen gummiartigen Elementen, den Zwischenelementen und der Einrichtung zur Aufnahme der gummiartigen Elemente am entsprechenden Arm des Kupplungselementes beziehungsweise der zum Arm weisenden Fläche des Mittelteiles durch Anvulkanisieren erfolgt. Die einzelnen Vulkanisierungsflächen sind dabei vorzugsweise parallel zueinander in Einbaulage ausgeführt. Die Momentenübertragung wird gegenüber den Ausführungen aus dem Stand der Technik durch eine Übertragung in Form von Kraft- und Reibschluß ersetzt. Dies bietet den Vorteil, daß die einzelnen Lagerpakete unter Fliehkrafteinfluß radial nicht auswandern können. Ebenso werden die halbschalenförmigen Zwischenelemente zwischen den einzelnen gummiartigen Elementen durch ihre Form in radialer Richtung gehalten.

Die Lagerblöcke sind desweiteren lösbar mit den einander in Umfangsrichtung benachbart angeordneten armförmigen Elementen verbunden. Der Anschluß der Außenhälften der Lagerblöcke, insbesondere der Gummipakete erfolgt dabei über Befestigungsmittel, welche den zur Achsrichtung quer verlaufenden Schenkeln eines in Umfangsrichtung L- oder U-förmigen Endstückes zugeordnet sind, bzw. in diesen geführt werden oder mit diesen direkt in Wirkverbindung treten.

Unter einem weiteren Aspekt der Erfindung sind Mittel zur radialen Sicherung des elastischen Lagerpaketes vorgesehen. Diese umfassen wenigstens eine formschlüssige Verbindung. Erfindungsgemäß ist die Ausführung als Nut-Feder-Verbindung. Der Halbrundkörper des Mittelteiles weist dazu eine Einrichtung zur Realisierung einer Nut-Federverbindung auf. Vorzugsweise weist der Halbrundkörper des Mittelteiles eine Feder auf, die am anderen Kupplungselement in eine Nut eingreift, oder umgekehrt. Die axiale Sicherung des gesamten Lagerpaketes erfolgt dabei über Reibschluß mittels Verbindungsschrauben im Mittelteil des Lagerpaketes.

Unter einem weiteren Aspekt der Erfindung werden die einzelnen Elemente des Lagerpaketes, insbesondere die Metallteile aus Leichtmetall ausgeführt, um eine bessere Wärmeabfuhr sowie eine Gewichtserleichterung zu erzielen.

Bezüglich der Ausgestaltung der Anschlußmöglichkeiten der einzelnen Kupplungselemente an die an- oder abtriebsseitigen Bauelemente bestehen ebenfalls eine Vielzahl von Möglichkeiten. Die Kupplungselemente weisen dazu im einfachsten Fall Nabenteile auf, welchen Mittel zur Realisierung einer formschlüssigen und/oder kraftschlüsigen Verbindung zugeordnet sind.

Die Ausführung mit zwei Kupplungselementen dient der Realisierung von Kupplungen mit einer Kupplungsebene. In einer vorteilhaften Ausführung zur Gewährleistung kardanischer und achsparaller Bewegungen werden zwei Kupplungsebenen hintereinandergeschaltet. In diesem Fall besteht die elastische Kupplung aus zwei Einzelkupplungen zur Realisierung einer Kupplungsebene die miteinander gekoppelt sind. Jede Kupplungsebene wird dabei durch zwei Kupplungselemente realisiert, wobei jeweils ein Kupplungselement der ersten Kupplungsebene direkt drehfest mit einem Kupplungselement der zweiten Kupplungsebene verbunden ist und jeweils die anderen nicht miteinander drehfest verbundenen Kupplungselemente der einzelnen Kupplungsebenen mit der An- und Abtriebsseite verbunden sind. Die drehfeste Verbindung eines Kupplungselementes der ersten Kupplungsebene mit einem Kupplungselement der zweiten Kupplungsebene erfolgt im einfachsten Fall durch die Anordnung beider Kupplungselemente auf einer Zwischenwelle.

Beim Verfahren zur Montage der elastischen Lagerpakete wird eine Druckpresse verwendet, welche radialen Druck auf das Mittelteil und die entsprechenden Außenhälften, das heißt die Elemente des anderen Kupplungsteiles ausübt und sich auf den sternförmigen Armen eines der beiden Kupplungselemente abstützt, wobei die Gegenkraft durch ein, die Kupplungsebene umschließendes Band aufgenommen wird.

Die erfindungsgemäße Lösung wird nachfolgend anhand von Figuren erläutert. Darin ist im einzelnen folgendes dargestellt
- Figur 1: verdeutlicht eine erfindungsgemäß gestaltete elastische Kupplung mit einer Kupplungsebene in einem modifizierten Axialschnitt, welcher eine Schnittdarstellung I-I gemäß Figur 2 verdeutlicht;
- Figur 2: verdeutlicht eine Ansicht I-I in Achsrichtung auf eine Kupplungsebene, insbesondere ein Kupplungselement mit elastischen Lagerpaketen;
- Figur 3: verdeutlicht eine weitere Ausführung einer erfindungsgemäß gestalteten elastischen Kupplung mit zwei Kupplungsebenen im Schnitt III-III gemäß Figur 2;
- Figur 4: verdeutlicht einen Schnitt gemäß der Linie IV - IV entsprechend Figur 2.

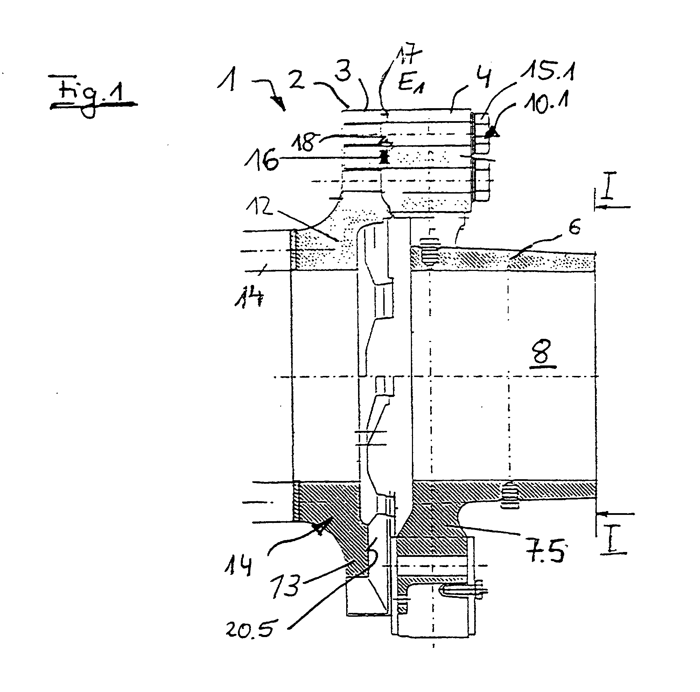

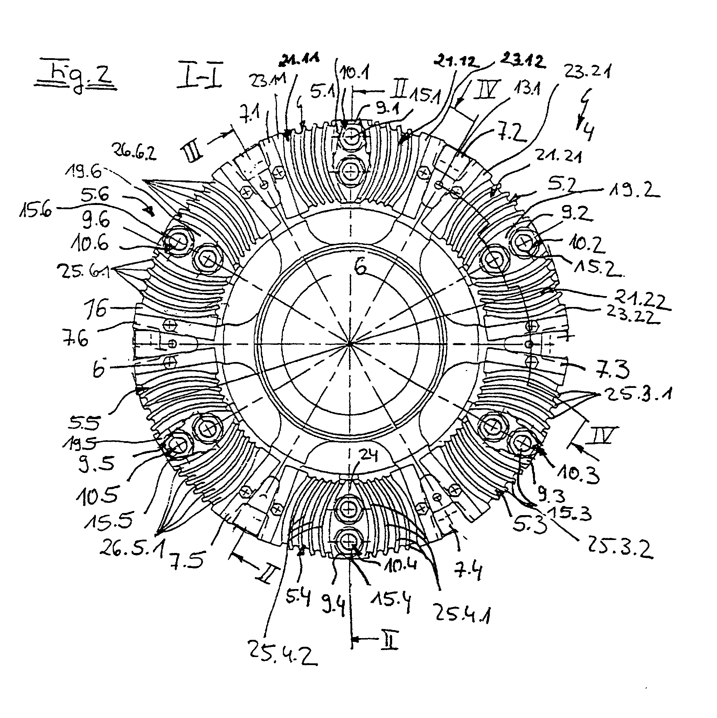

Die Figur 1 verdeutlicht anhand eines Axialschnittes eine Ausführung einer erfindungsgemäß gestalteten elastischen Kupplung 1, insbesondere einer Lagerpaket-Gelenkkupplung 2. Bei dieser Ausführung handelt es sich um eine Ausführung der elastischen Kupplung 1 mit einer Kupplungsebene E₁. Die elastische Kupplung 1 umfaßt dazu ein erstes Kupplungselement 3 und ein zweites Kupplungselement 4. Die Bezeichnung erstes und zweites Kupplungselement dient lediglich der Unterscheidung und beschreibt nicht die Richtung der Leistungsübertragung. Das erste Kupplungselement 3 und das zweite Kupplungselement 4 sind dabei erfindungsgemäß kraft- und reibschlüssig miteinander verbindbar. Das erste Kupplungselement 3 oder das zweite Kupplungselement 4 ist mit einer Antriebsseite und dem entsprechend das zweite Kupplungselement oder das erste Kupplungselement 3 mit einer Abtriebseite verbunden. Wenigstens eines der beiden Kupplungselemente - erstes Kupplungselement 3 oder zweites Kupplungselement 4 - umfaßt eine Mehrzahl von Lagerpaketen 5.1 bis 5.n, welche elastisch ausgeführt sind und über die die reib- und kraftschlüssige Verbindung mit dem jeweils anderen Kupplungselement realisiert wird. Im dargestellten Fall sind die Lagerpakete 5.1 bis 5.n gemäß Figur 2 im zweiten Kupplungselement 4 zugeordnet. Dieses umfaßt einen Nabenteil 6, welcher zur Realisierung der drehfesten Verbindung mit der An- beziehungsweise der Abtriebseite dient und von dem sich sternförmig einzelne Arme in radialer Richtung weg erstrecken. Die Lagerpakete 5.1 bis 5.n sind dabei jeweils zwischen zwei einander in Umfangsrichtung betrachtet nebeneinander angeordneten Armen 7.1 und 7.2 beziehungsweise 7.n und 7.n+1 angeordnet. Der Nabenteil 6 und die Arme 7.1 bis 7.n bilden dabei im dargestellten Fall einen sogenannten Achsstem 8, welcher vorzugweise als integrale Baueinheit ausgeführt ist. Die Lagerpakete 5.1 bis 5.n sind dabei jeweils ringsegmentförmig zwischen den einzelnen Armen 7.1 bis 7.n in Umfangsrichtung betrachtet mit Vorspannung eingesetzt. Jedes Lagerpaket 5.1 bis 5.n ist dabei vorzugsweise als Gummi-Lagerpaket ausgeführt. Diese umfassen jeweils einen Mittelteil 9.1 bis 9.n, welcher jeweils über Befestigungselemente 10.1 bis 10.n mit dem ersten Kupplungselement 3 verbunden ist. Das erste Kupplungselement 3 umfaßt ebenfalls wenigstens einen Nabenteil 12, von welchem sich in radialer Richtung sternförmig eine Mehrzahl von armförmigen Elementen 13.1 bis 13.n erstrecken. Vorzugsweise bilden das Nabenteil 12 und die armförmigen Elemente 13.1 bis 13.n eine integrale Baueinheit in Form eines sogenannten Hohlwellensternes 14. Das Mittelteil 9.1 beziehungsweise die Mittelteile 9.2 bis 9.n der einzelnen Lagerpakete 5.1 bis 5.n sind dabei mittels der Befestigungselemente 10.1 bis 10.n, beispielsweise in Form von Schrauben 15.1 bis 15.n mit den armförmigen Elementen 13.1 bis 13.n des Hohlwellensternes 14 verbunden. Die Kraftübertragung vom Lagerpaket 5.1 bis 5.n auf den Hohlwellenstern 14 erfolgt formschlüssig durch eine Nut-Federverbindung 16 des Mittelteiles 9.1 beziehungsweise 9.2 bis 9.n mit den armförmigen Elementen 13.1 bis 13.n des Hohlwellensternes 14 und reibschlüssig durch die Verbindung mittels der Befestigungselemente 10.1 bis 10.n, beispielsweise der Schraubverbindungen 15.1 bis 15.n an den beiden Anlageflächen 17 und 18, wobei die Anlageflächen 17 von den einzelnen Flächenbereichen 19.1 bis 19.n der Lagerpakete 5.1 bis 5.n gebildet werden, und die Anlageflächen 18 jeweils von den einzelnen Flächenbereichen 20.1 bis 20.n, welche von den armförmigen Elementen 13.1 bis 13.n des Hohlwellenstems 14 gebildet werden. Die einzelnen Arme 7.1 bis 7.n des Achsstemes 8 gehen dabei gleichmäßig verteilt vom Nabenteil 6 aus. In Analogie gilt diese Aussage auch für die armförmigen Elemente 13.1 bis 13.n, die sich vom Nabenteil 12 erstrecken.

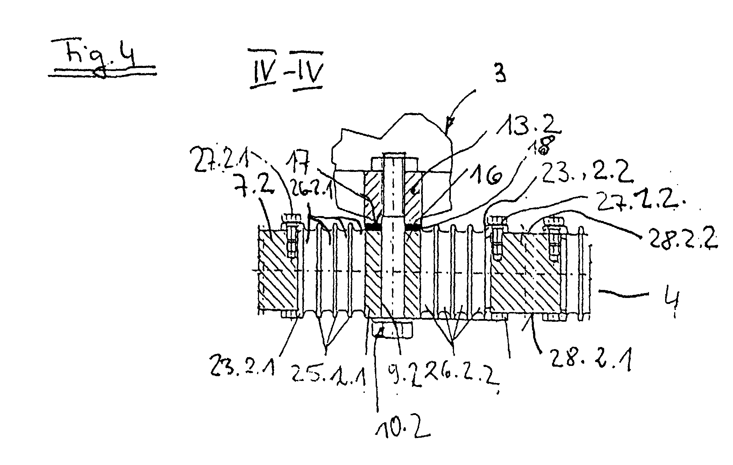

Die Lagerpakete 5.1 bis 5.n umfassen dabei neben dem Mittelteil 9.1 bis 9.n jeweils zwei beidseitig in Umfangsrichtung am Mittelteil 9.1 bis 9.n angeordnete Gummiblöcke 21.1.1, 21.1.2 bis 21.n.1, 21.n.2. Die einzelnen Lagerblöcke, welche vorzugsweise als Gummiblöcke ausgeführt sind, sind dabei symmetrisch bezogen auf den Mittelteil 9.1 - 9.n angeordnet und an diesen vorzugsweise anvulkanisiert. Die Gummiblöcke 21.1.1, 21.1.2 bis 21.n.1, 21.n.2 sind ebenfalls in Umfangsrichtung ausgerichtet und sind an ihren, vom Mittelteil 9.1 bis 9.n wegweisenden Flächenbereichen 22.1.1, 22.1.2 bis 22.n.1, 22.n.2 vorzugsweise ebenfalls durch Vulkanisation und in symmetrischer Anordnung durch Platten 23.11, 23.12 bis 23.n.1, 23.n.2 abgeschlossen. Zur Vermeidung eines Ausweichens der Lagerpakete 5.1 bis 5.n unter Fliehkrafteinwirkung in radialer Richtung sind erfindungsgemäß das Mittelteil 9.1 bis 9.n und die an diese jeweils angeschlossenen Gummiblöcke 21.1.1, 21.1.2 bis 21.n1., 21.n.2 derart gestaltet, daß eine Selbstzentrierung erzielt wird. Dazu weist jedes Lagerpaket 5.1 bis 5.n die Form eines Kreisringsegmentes auf und das Mittelteil 9.1 bis 9.n ist als Halbrundkörper 24 ausgeführt. Dies bedeutet, daß die in Umfangsrichtung weisenden Flächen des Mittelteiles 9.1 bis 9.n wenigstens in dieser Richtung gewölbt ausgeführt sind, in axialer Richtung betrachtete in gleichbleibendes Profil aufweisen und das Mittelteil 9.1 bis 9.n im Querschnitt betrachtet in radialer Richtung im Bereich des Innenumfanges 30 eine Verjüngung in Richtung des Nabenteiles 6 bzw. der Kupplungsachse A erfährt. Die Lagerblöcke 21.1.1, 21.1.2 bis 21.n.1, 21.n.2 werden aus Zwischenlagen in Form von sogenannten Halbschalenelementen 25.1.1 bis 25.1.n beziehungsweise 25.1.2 bis 25.n.2 und den Endstücken in Form von Platten 23.11, 23.12 bis 23.n.1, 23.n.2 mit dazwischen liegenden Gummielementen 26.11 bis 26.n.2, auch als Gummispuren bezeichnet. Die einzelnen Gummispuren 26.11 bis 26.n.2 sind dabei an die Halbschalen 25.1.1 bis 25.n.2 anvulkanisiert. Dabei können die einzelnen Gummielemente 26.11 bis 26.n.2 eine gleichmäßige Dicke oder eine auf den Außendurchmesser hin geöffnete Keilform aufweisen. Bezüglich der Ausbildung der Endstücken, welche vorzugsweise plattenförmig in Form von Platten 23.11 bis 23.n.2 ausgeführt sind, bestehen eine Vielzahl von Möglichkeiten. Diese können gemäß der Ansicht IV-IV gemäß Figur 2 wie in Figur 4 dargestellt U-förmig ausgebildet sein, oder aber auch wenigstens L-förmig. Dabei ist wenigstens ein Schenkel des Endstückes 23.11bis 23.n.2 mit einer Öffnung, vorzugsweise in Form einer Durchgangsbohrung versehen. Durch diese hier nicht dargestellte Durchgangsbohrung werden Befestigungselemente 27.1.1, 27.1.2 bis 27.n.1, 27.n.2 geführt, um die einzelnen Schenkel der Endstücke 23.11, 23.12 bis 23.n.1 bis 23.n.2 an den in axiale Richtung weisenden Flächen der Arme 7.1 bis 7.n, welche jeweils mit 28.1.1, 28.1.2 bis 28.n.1, 28.n.2 bezeichnet sind befestigt und somit eine Bewegung zwischen den als Endstück ausgeführten plattenförmigen Elementen 23.11, 23.12 bis 23.n.1, 23.n.2 und den Armen 7.1 bis 7.n verhindert. Andere Möglichkeiten der Realisierung einer lösbaren Verbindung sind ebenfalls denkbar.

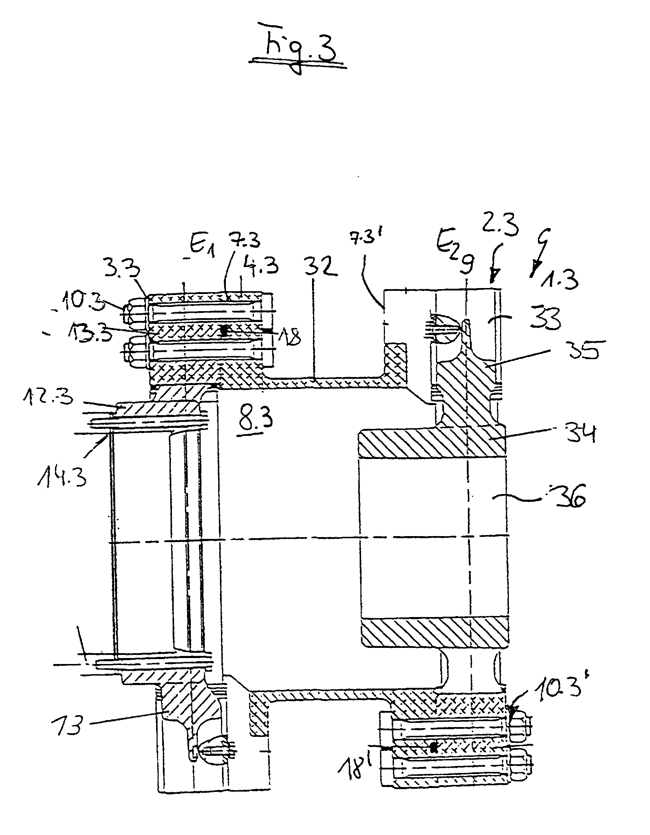

Die Figur 3 verdeutlicht in einer Schnittdarstellung 11-11 gemäß Figur 2 eine weitere Ausführung einer erfindungsgemäß gestalteten elastischen Kupplung 1.3 in Form einer Lagerpaket-Gelenkkupplung 2.3, welche zwei Kupplungsebenen aufweist. Diese sind hier mit E₁ und E₂ gekennzeichnet. Diese Ausführung bietet den Vorteil, daß außer einer Winkelabweichung auch einer paralleler Achsversatz der beiden Kupplungsebenen - erster Kupplungsebene E₁ und zweiter Kupplungsebene E₂ ausgleichbar ist. Die Lagerpaket-Gelenkkupplung 2.3 besteht dabei aus zwei elastischen Gelenkkupplungen, die miteinander durch eine Kardan-Hohlwelle 32 verbunden sind. Dabei ist jede der einzelnen Gelenkkupplungen entsprechend einer Kupplung mit einer Kupplungsebene wie in den Figuren 1 und 2 dargestellt, aufgebaut. Für gleiche Elemente wurden daher die gleichen Bezugszeichen gewählt. Es ist somit noch ein dtittes Kupplungselement 33 dazugekommen, welches mit dem zweiten Kupplungselement der ersten Kupplungsebene über die Lagerpakete gekoppelt ist Das dritte Kupplungselement 33 weit einen Nabenteil 34 auf und armförmige Elemente 35, welche sich in Umfangsrichtung betrachtet in radialer Richtung erstrecken. Nabenteil 34 und armförmige Elemente 35 bilden dabei einen Hohlwellenstem 36. Die Lagerpakete für die zweite Kupplungsebene sind dabei entweder zwischen den in Umfangsrichtung zueiander benachbart angeordneten armförmigen Elementen des zweiten oder dritten Kupplungselementes angeordnet.

Die Figur 4 verdeutlicht eine Schnittdarstellung gemäß der Linie IV - IV entsprechend Figur 2. In diesem Fall ist das Endstück 23.11 U-förmig ausgebildet, kann aber auch durch Entfall eines Schenkels L-förmig gestaltet werden. Dabei ist ein Schenkel des Endstückes 23.11 mit einer Bohrung versehen. Mittels Befestigungselementen wird der Schenkel des Endstückes 23.11 an die Stirnfläche der Arme 7.1 befestigt und somit eine Bewegung zwischen Endstück 23.11 und den Armen 7.1 verhindert. Desweiteren erkennbar ist der Halbrundkörper des Mittelteils 9.1 im Querschnitt in Umfangsrichtung betrachtet. Dieser weist eine Feder auf, die in die Nut an den Stirnflächen des zweiten Kupplungelementes 3 eingreift. Diese formschlüssige Verbindung übernimmt die radiale Sicherung des Lagerpakets 5.1. Mittels zwei oder mehr Verbindungsschrauben erfolgt die axiale reibschlüssige Verbindung des Mittelteiles 14 mit den Stirnflächen. Die Nabe des Hohlwellenstems 14 ist gernäß Figur 1über eine Stirnverzahnung 39 und durch Durchgangslöcher 37 gesteckte Schrauben 38 mit einer Hohlwelle 40 verbunden. Die Hohlwelle 40 und die durch diese gehende Achswelle können in Abhängigkeit von den Platzverhältnissen kardanische oder achsparallele Bewegungen ausführen.

Die konkrete konstruktive Ausgestaltung der elastischen Kupplung ist nicht auf die beschriebenen Ausführungen gemäß der Figuren 1 bis 4 beschränkt. Entscheidend ist die bogenförmige Gestaltung des Mittelteils der Lagerpakete und der sich daran anschließenden Lagerblöcke, welche eine selbstzentrierende Wirkung aufweisen. Bezüglich des Einsatzgebietes bestehen keine Beschränkungen. Die Ausbildung als Einfach- oder Doppelkupplung erfolgt in Abhängigkeit der auszugleichenden Bewegungen.

### Bezugszeichenliste

- 1, 1.3: Elastische Kupplung
- 2, 2.3: Lagerpaket-Gelenkkupplung
- 3: erstes Kupplungselement
- 4: zweites Kupplungselement
- 5.1 - 5.n: Lagerpakete
- 6: Nabenteil
- 7.1 - 7.n: Arme
- 8: Achsstern
- 9.1 - 9.n: Mittelteil
- 10.1 - 10.n: Befestigungselemente
- 11.1 - 11.n: lösbare Verbindung
- 12: Nabenteil
- 13.1 - 13.n: Armförmige Elemente
- 14: Hohlwellenstern
- 15.1 - 15.n: Schrauben
- 16: Nut-Federverbindung
- 17: Anlageflächen
- 18: Anlageflächen
- 19.1 - 19.n: Flächenbereiche am Lagerpaket
- 20.1 - 20.n: Flächenbereiche der Arme des Hohlwellensternes
- 21.1.1, 21.1.2 - 21.n.1, 21.n.2: Lagerblöcke
- 22.1.1., 22.1.2 - 22.n.1, 22.n.2: Flächenbereiche, welche vom Mittelteil wegweisen
- 23.11, 23.12 - 23.n.2, 23.n.1: Endstück; plattenförmige Elemente
- 24: Halbrundkörper
- 25.1.1 - 25.n.2: Zwischenelemente; halbschalenförmige Elemente
- 26.11a - 26.11c, 26.12a - 26.12c: gummiartige Elemente
- 27.1.1 - 27.n.2: Befestigungselemente
- 28.1.1 - 28.n.2: in axiale Richtung weisende Flächen der Arme 7.1 bis 7.n
- 30: Innenumfang
- 31: Außenumfang
- 32: Durchgangslöcher
- 33: drittes Kupplungselement
- 34: Nabenteil
- 35: armförmige Elemente
- 36: Hohlwellenstem
- 37: Durchgangslöcher
- 38: Schrauben
- 39: Stirnverzahnung
- 40: Hohlwelle

## Patentansprüche

1. Elastische Kupplung (1; 1.3), insbesondere Lagerpaket-Gelenkkupplung (2; 2.3) mit wenigstens einer Kupplungsebene (E₁)
mit einem ersten Kupplungselement (3; 3.3) und einem zweiten Kupplungselement (4; 4.3) zur wenigstens mittelbaren Kopplung mit einem an- oder abtriebsseitigen Bauelement;
das erste (3; 3.3) oder zweite Kupplungselement (4; 4.3) umfaßt mindestens einen Nabenteil (6) mit sich in radialer Richtung erstreckenden armförmigen Elementen (7.1, 7.2, 7.3, 7.4, 7.5, 7.6);
zwischen zwei einander in Umfangsrichtung benachbart angeordneten armförmigen Elementen (7.1, 7.2, 7.3, 7.4, 7.5, 7.6) ist jeweils ein elastisches Lagerpaket (5.1, 5.2, 5.3, 5.4, 5.5, 5.6) angeordnet;
jedes Lagerpaket (5.1, 5.2, 5.3, 5.4, 5.5, 5.6) eines Kupplungselementes - erstes oder zweites Kupplungselement - umfaßt ein im Querschnitt in axialer Richtung betrachtet sich in radialer Richtung wenigstens im Bereich des Innenumfanges (30) zur Kupplungsachse (A) verjüngend ausgeführtes Mittelteil (9.1, 9.2, 9.3, 9.4, 9.5, 9.6), welches lösbar mit dem anderen Kupplungselement - zweites oder erstes Kupplungselement (3, 4; 3.3, 4.3) verbindbar ist und an die sich beidseitig symmetrisch anvulkanisierte elastische Lagerblöcke (21.1.1, 21.1.2, 21.2.1, 21.2.2, 21.31, 21.32, 21.41, 21.42, 21.51, 21.52, 21.61, 21.62) mit außenliegenden Endstücken (23.11, 23.12, 23.21, 23.22, 23.31, 23.32, 23.41, 23.42, 23.51, 23.52, 23.61, 23.62), welche lösbar mit dem armförmigen Element (7.1, 7.2, 7.3, 7.4, 7.5, 7.6) verbindbar sind, anschließen;
die Lagerblöcke (21.1.1, 21.1.2, 21.2.1, 21.2.2, 21.31, 21.32, 21.41, 21.42, 21.51, 21.52, 21.61, 21.62) umfassen wenigstens zwei gummiartige Elemente (26.11, 26.12, 26.21, 26.22, 26.31, 26.32, 26.41, 26.42, 26.51, 26.52, 26.61, 26.62) mit dazwischen
angeordneten Zwischenelementen (25.1.1, 25.1.2, 25.2.1, 25.2.2, 25.3.1, 25.3.2, 25.4.1, 25.4.2, 25.5.1, 25.5.2, 25.6.1, 25.6.2);
**gekennzeichnet durch** folgende Merkmale:
die Form der in Umfangsrichtung weisenden Anlage- bzw. Kontaktflächen zwischen den einzelnen Elementen der Lagerblöcke (21.1.1, 21.1.2, 21.2.1, 21.2.2, 21.31, 21.32, 21.41, 21.42, 21.51, 21.52, 21.61, 21.62) ist derart ausgeführt, daß die Zwischenelemente (25.1.1, 25.1.2, 25.2.1, 25.2.2,
25.3.1, 25.3.2, 25.4.1, 25.4.2, 25.5.1, 25.5.2, 25.6.1, 25.6.2) und die gummiartigen Elemente (26.1.1, 26.1.2, 26.2.1, 26.2.2, 26.3.1, 26.3.2, 26.4.1, 26.4.2, 26.5.1, 26.5.2, 26.6.1, 26.6.2) eine Selbstzentrierung erfahren;
die Kontaktflächen des Mittelteils (9.1, 9.2, 9.3, 9.4, 9.5, 9.6) und der Zwischenelemente (25.1.1, 25.1.2, 25.2.1, 25.2.2, 25.3.1, 25.3.2, 25.4.1, 25.4.1, 25.5.1, 25.5.2, 25.6.1, 25.6.2) sind in der Kupplungsebene im Querschnitt betrachtet bzw. im Querschnitt betrachtet über ihre radiale Erstreckung **durch** wenigstens zwei unterschiedliche Richtungsvektoren beschreibbar;
das Mittelteil (9.1, 9.2, 9.3, 9.4, 9.5, 9.6) weist im Querschnitt betrachtet eine nach außen gewölbte Seitenfläche auf und die Zwischenelemente (25.1.1, 25.1.2, 25.2.1, 25.2.2, 25.3.25.3.2,25.4.1, 25.4.2, 25.5.1, 25.5.2, 25.6.1, 25.6.2) sind im Querschnitt in Umfangsrichtung betrachtet als Halbschale ausgeführt;
die gummiartigen Elemente (26.1.1, 26.1.2, 26.2.1, 26.2.2, 26.3.1, 26.3.2, 26.4.1, 26.4.2, 26.5.1, 26.5.2, 26.6.1, 26.6.2) weisen in einer Ansicht in Umfangsrichtung bzw. senkrecht zur Achsrichtung betrachtet eine Kreisringsegmentform auf;
das im ersten oder zweiten Kupplungselement vorgesehene Mittelteil (9.1, 9.2, 9.3, 9.4, 9.5, 9.6) und das zweite oder erste Kupplungselement (3, 4; 3.3, 4.3) sind formschlüssig miteinander verbunden;
die Mittel zur Realisierung einer formschlüssigen Verbindung zwischen Mittelteil und erstem Kupplungselement oder zweitem Kupplungselement umfassen eine Nut-Federverbindung (16), wobei die Nut oder die Feder dem ersten Kupplungselement zugeordnet ist.

2. Elastische Kupplung (1, 1.3) an Anspruch 1, **dadurch gekennzeichnet, dass** die gummiartigen Elemente (26.1.1, 26.1.2, 26.2.1, 26.2.2., 26.3.1, 26.3.2, 26.4.1, 26.4.2, 26.5.1, 26.5.2, 26.6.1, 26.6.2) bei Betrachtung der Kupplung in einer Ansicht auf die Anordnung der einzelnen Elemente in Umfangsrichtung der Kupplung betrachtet in radialer Richtung eine gleichmäßige Breite aufweisen.

3. Elastische Kupplung (1, 1.3) nach Anspruch 1, **dadurch gekennzeichnet, daß** die gummiartigen Elemente (26.1.1, 26.1.2, 26.2.1, 26.2.2, 26.3.1, 26.3.2, 26.4.1, 26.4.2, 26.5.1, 26.5.2, 26.6.1, 26.6.2) bei Betrachtung der Kupplung in einer Ansicht auf die Anordnung der einzelnen Elemente in Umfangsrichtung der Kupplung in radialer Richtung im Bereich des Außenumfanges (31) der Lagerblöcke keilförmig geöffnet bzw. keilförmig mit dem dicken Ende im Bereich des Außenumfanges ausgeführt sind.

4. Elastische Kupplung (1, 1.3) nach einem der Ansprüche 1 bis 3, **dadurch gekennzeichnet, daß** die einzelnen Elemente Mittelteil (9.1, 9.2, 9.3, 9.4, 9.5, 9.6) und/oder Zwischenelemente (25.1.1, 25.1.2, 25.2.1, 25.2.2, 25.3.1, 25.3.2, 25.4.1, 25.4.2, 25.5.1, 25.5.2, 25.6.1, 25.6.2) und/oder die gummiartigen Elemente (26.1.1, 26.1.2, 26.2.1, 26.2.2, 26.3.1, 26.3.2, 26.4.1, 26.4.2, 26.5.1, 26.5.2, 26.6.1, 26.6.2) in axialer Richtung betrachtet einen konstanten Querschnitt aufweisen.

5. Elastische Kupplung (1, 1.3) nach einem der Ansprüche 1 bis 4 **dadurch gekennzeichnet, daß** das Endstück (23.11, 23.12, 23.21, 23.22, 23.31, 23.32, 23.41, 23.42, 23.51, 23.52, 23.61, 23.62) bei Betrachtung der Kupplung in einer Ansicht auf die Anordnung der einzelnen Elemente in Umfangsrichtung der Kupplung wenigstens einen L-förmigen Querschnitt oder einen U-förmigen Querschnitt aufweist, wobei den in einer in axialer Richtung der Kupplung angeordneten Ebene angeordneten Schenkeln Mittel zur Realisierung der lösbaren Verbindung zwischen den Endstücken (23.11, 23.12, 23.21, 23.22, 23.31, 23.32, 23.41, 23.42, 23.51, 23.52, 23.61, 23.62) und den armförmigen Elementen (7.1, 7.2, 7.3, 7.4, 7.5, 7.6) zugeordnet sind.

6. Elastische Kupplung (1, 1.3) nach Anspruch 5, **dadurch gekennzeichnet, daß** die Mittel zur Realisierung einer lösbaren Verbindung kraftschlüssig wirkende Befestigungselemente (27.1.1, 27.1.2, 27.2.1, 27.2.2, 27.3.1, 27.3.2, 27.4.1, 27.4.2, 27.5.1, 27.5.2, 27.6.1, 27.6.2) umfassen.

7. Elastische Kupplung (1, 1.3) nach einem der Ansprüche 1 bis 6, **dadurch gekennzeichnet, daß** die Mittel zur Realisierung einer lösbaren Verbindung (11.1, 11.2, 11.3, 11.4, 11.5, 11.6) zwischen dem im ersten oder zweiten Kupplungselement vorgesehenen Mittelteil (9.1, 9.2, 9.3, 9.4, 9.5, 9.6) und dem zweiten oder ersten Kupplungselement (3, 4; 3.3, 4.3) Mittel zur Realisierung einer kraftschlüssigen Verbindung umfassen.

8. Elastische Kupplung (1, 1.3) nach Anspruch 7, **dadurch gekennzeichnet, daß** die Mittel zur Realisierung einer kraftschlüssigen Verbindung Befestigungselemente (10.1, 10.2, 10.3, 10.4, 10.5, 10.6) umfassen, welche im Mittelteil (9.1, 9.2, 9.3, 9.4, 9.5, 9.6) wenigstens geführt oder aber mit diesem kraftschlüssig in Wirkverbindung treten.

9. Elastische Kupplung (1, 1.3) nach einem der Ansprüche 1 bis 8, **dadurch gekennzeichnet, daß** die gummiartigen Elemente (26.11, 26.12, 26.21, 26.22, 26.31, 26.32, 26.41, 26.42, 26.51, 26.52, 26.61, 26.62) an den Zwischenelementen (25.1.1, 25.1.2, 25.2.1, 25.2.2, 25.3.1, 25.3.2, 25.4.1, 25.4.2, 25.5.1, 25.5.2, 25.6.1, 25.6.2) anvulkanisiert sind.

10. Elastische Kupplung (1, 1.3) nach einem der Ansprüche 1 bis 9, **dadurch gekennzeichnet, daß** die Anlageflächen zwischen Endstück (23.11, 23.12, 23.21, 23.22, 23.31, 23.32, 23.41, 23.42, 23.51, 23.52, 23.61, 23.62) und den an diese angrenzenden gummiartige Elemente (26.1.1, 26.1.2, 26.2.1, 26.2.2, 26.3.1, 26.3.2, 26.4.1, 26.4.2, 26.5.1, 26.5.2, 26.6.1, 26.6.2) ringsegmentförmig ausgebildet sind.

11. Elastische Kupplung (1, 1.3) nach einem der Ansprüche 1 bis 10, **dadurch gekennzeichnet, daß** das andere zweite Kupplungselement (3, 4; 3.3, 4.3) wenigstens ein Nabenteil (12) und von diesem ausgehend sich in radialer Richtung erstreckende armförmige Elemente (13.1, 13.2, 13.3, 13.4, 13.5, 13.6) aufweist, wobei die lösbare Verbindung zwischen Mittelteil (9.1, 9.2, 9.3, 9.4, 9.5, 9.6) des im ersten Kupplungselement (4; 4.3) angeordneten Lagerblockes (5.1, 5.2, 5.3, 5.4, 5.5, 5.6) mit den annförmigen Elementen (13.1, 13.2, 13.3, 13.4, 13.5, 13.6) erfolgt.

12. Elastische Kupplung (1, 1.3) nach Anspruch 11, **dadurch gekennzeichnet, daß** wenigstens das Nabenteil (6) und die armförmigen Elemente (7.1, 7.2, 7.3, 7.4, 7.5, 7.6) des ersten Kupplungselementes (4; 4.3) und/oder das Nabenteil (12) und
die armförmigen Elemente (13.1, 13.2, 13.3, 13.4, 13.5, 13.6) des zweiten Kupplungselementes (3; 3.3) aus einem metallischen Werkstoff bestehen und der metallische Werkstoff als gewichtsoptimierte Metalllegierung ausgeführt ist.

13. Elastische Kupplung (1.3), insbesondere Lagerpaket-Gelenkkupplung (2; 2.3), nach einem der Ansprüche 1 bis 12, **gekennzeichnet durch** die folgenden Merkmale:
mit zwei hintereinandergeschalteten Kupplungsebenen (E₁, E₂);
jede Kupplungsebene (E₁, E₂) wird **durch** zwei Kupplungselemente realisiert, wobei jeweils ein Kupplungselement der ersten Kupplungsebene direkt drehfest mit einem Kupplungselement der zweiten Kupplungsebene verbunden ist und jeweils die anderen nicht miteinander drehfest verbundenen Kupplungselemente der einzelnen Kupplungsebenen mit der An- und Abtriebsseite verbunden sind.

14. Elastische Kupplung (1.3) nach Anspruch 13, **dadurch gekennzeichnet, daß** die drehfeste Verbindung eines Kupplungselementes der ersten Kupplungsebene mit einem Kupplungselement der zweiten Kupplungsebene durch die Anordnung beider Kupplungselemente auf einer Zwischenwelle (36) erfolgt.

## Claims

1. Flexible coupling (1; 1.3), in particular bearing stack joint coupling (2; 2.3) comprising at least one coupling plane (E₁),
comprising a first coupling element (3; 3.3) and a second coupling element (4; 4.3) for at least indirect coupling to a drive or output side component;
the first (3; 3.3) or second coupling element (4; 4.3) comprises at least one hub part (6) comprising arm-like elements (7.1, 7.2, 7.3, 7.4, 7.5, 7.6) extending in the radial direction;
a respective flexible bearing stack (5.1, 5.2, 5.3, 5.4, 5.5, 5.6) is arranged between two arm-like elements (7.1, 7.2, 7.3, 7.4, 7.5, 7.6) arranged adjacent to one another in the peripheral direction;
each bearing stack (5.1, 5.2, 5.3, 5.4, 5.5, 5.6) of a coupling element - first or second coupling element - comprises a central part (9.1, 9.2, 9.3, 9.4, 9.5, 9.6) designed so as to taper toward the coupling axis (A) in the radial direction, viewed in cross-section in the axial direction, at least in the region of the inner periphery (30), the central part being detachably connectable to the other coupling element - second or first coupling element (3, 4; 3.3, 4.3) and to which flexible bearing blocks (21.1.1, 21.1.2, 21.2.1, 21.2.2, 21.31, 21.32, 21.41, 21.42, 21.51, 21.52, 21.61, 21.62), vulcanised-on symmetrically to both sides, with external end pieces (23.11, 23.12, 23.21, 23.22, 23.31, 23.32, 23.41, 23.42, 23.51, 23.52, 23.61, 23.62), which can be detachably connected to the arm-like element (7.1, 7.2, 7.3, 7.4, 7.5, 7.6), adjoin;
the bearing blocks (21.1.1, 21.1.2, 21.2.1, 21.2.2, 21.31, 21.32, 21.41, 21.42, 21.51, 21.52, 21.61, 21.62) comprise at least two rubber-like elements (26.11, 26.12, 26.21, 26.22, 26.31, 26.32, 26.41, 26.42, 26.51, 26.52, 26.61, 26.62) with intermediate elements (25.1.1, 25.1.2, 25.2.1, 25.2.2, 25.3.1, 25.3.2, 25.4.1, 25.4.2, 25.5.1, 25.5.2, 25.6.1, 25.6.2) arranged therebetween;
**characterised by** the following features:
the shape of the bearing or contact faces pointing in the peripheral direction, between the individual elements of the bearing blocks (21.1.1, 21.1.2, 21.2.1, 21.2.2, 21.31, 21.32, 21.41, 21.42, 21.51, 21.52, 21.61, 21.62) is constructed in such a way that the intermediate elements (25.1.1, 25.1.2, 25.2.1, 25.2.2, 25.3.1, 25.3.2, 25.4.1, 25.4.2, 25.5.1, 25.5.2, 25.6.1, 25.6.2) and the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) undergo self-centring;
the contact faces of the central part (9.1, 9.2, 9.3, 9.4, 9.5, 9.6) and of the intermediate elements (25.1.1, 25.1.2, 25.2.1, 25.2.2, 25.3.1, 25.3.2, 25.4.1, 25.4.2, 25.5.1, 25.5.2, 25.6.1, 25.6.2), viewed in the coupling plane in cross-section or viewed in cross-section, can be described over their radial extension by at least two different directional vectors;
the central part (9.1, 9.2, 9.3, 9.4, 9.5, 9.6) has, viewed in cross-section, outwardly curved lateral faces and the intermediate elements (25.1.1, 25.1.2, 25.2.1, 25.2.2, 25.3, 25.3.2, 25.4.1, 25.4.2, 25.5.1, 25.5.2, 25.6.1, 25.6.2) are designed as shells, viewed in cross-section in the peripheral direction;
the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) have, seen in a view in the peripheral direction or perpendicular to the axial direction, a ring segment shape;
the central part (9.1, 9.2, 9.3, 9.4, 9.5, 9.6) provided in the first or second coupling element and the second or first coupling element (3, 4; 3.3., 4.3) are connected to one another with interlocking fit;
the means for producing an interlocking connection between the central part and first coupling element or second coupling element comprise a tongue and groove joint (16), the groove or tongue being associated with the first coupling element.

2. Flexible coupling (1, 1.3) according to claim 1, **characterised in that** the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) have a uniform width in the radial direction when observing the coupling in a view onto the arrangement of the individual elements, viewed in the peripheral direction of the coupling.

3. Flexible coupling (1, 1.3) according to claim 1, **characterised in that** the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) are constructed in the radial direction so as to be open in a wedge-like manner in the region of the outer periphery (31) of the bearing blocks or wedge-shaped with the thick end in the region of the outer periphery, when observing the coupling in a view onto the arrangement of the individual elements in the peripheral direction of the coupling.

4. Flexible coupling (1, 1.3) according to any of claims 1 to 3, **characterised in that** the individual elements central part (9.1, 9.2, 9.3, 9.4, 9.5, 9.6) and/or intermediate elements (25.1.1, 25.1.2, 25.2.1, 25.2.2, 25.3.1, 25.3.2, 25.4.1, 25.4.2, 25.5.1, 25.5.2, 25.6.1, 25.6.2) and/or the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) have a constant cross-section, viewed in the axial direction.

5. Flexible coupling (1, 1.3) according to any of claims 1 to 4, **characterised in that** the end piece (23.11, 13.12, 23.21, 23.22, 23.31, 23.32, 23.41, 23.42, 23.51, 23.52, 23.61, 23.62) comprises at least one L-shaped cross-section or one U-shaped cross-section, when observing the coupling in a view onto the arrangement of the individual elements in the peripheral direction of the coupling, means for achieving the detachable connection between the end pieces (23.11, 23.12, 23.21, 23.22, 23.31, 23.32, 23.41, 23.42, 23.51, 23.52, 23.61, 23.62) and the arm-like elements (7.1, 7.2, 7.3, 7.4, 7.5, 7.6) being associated with the limbs arranged in a plane arranged in the axial direction of the coupling.

6. Flexible coupling (1, 1.3) according to claim 5, **characterised in that** the means for achieving a detachable connection comprise non-positively acting fastening elements (27.1.1, 27.1.2, 27.2.1, 27.2.2, 27.3.1, 27.3.2, 27.4.1, 27.4.2, 27.5.1, 27.5.2, 27.6.1, 27.6.2).

7. Flexible coupling (1, 1.3) according to any of claims 1 to 6, **characterised in that** the means for achieving a detachable connection (11.1, 11.2, 11.3, 11.4, 11.5, 11.6) between the central part (9.1, 9.2, 9.3, 9.4, 9.5, 9.6) provided in the first or second coupling element and the second or first coupling element (3, 4; 3.3, 4.3) comprise means for achieving a non-positive connection.

8. Flexible coupling (1, 1.3) according to claim 7, **characterised in that** the means for achieving a non-positive connection comprise fastening elements (10.1, 10.2, 10.3, 10.4, 10.5, 10.6) which are at least guided in the central part (9.1, 9.2, 9.3, 9.4, 9.5, 9.6) or else come into non-positive operative connection therewith.

9. Flexible coupling (1, 1.3) according to any of claims 1 to 8, **characterised in that** the rubber-like elements (26.11, 26.12, 26.21, 26.22, 26.31, 26.32, 26.41, 26.42, 26.51, 26.52, 26.61, 26.62) are vulcanised onto the intermediate elements (25.1.1, 25.1.2, 25.2.1, 25.2.2, 25.3.1, 25.3.2, 25.4.1, 25.4.2, 25.5.1, 25.5.2, 25.6.1, 25.6.2).

10. Flexible coupling (1, 1.3) according to any of claims 1 to 9, **characterised in that** the bearing faces between end piece (23.11, 23.12, 23.21, 23.22, 23.31, 23.32, 23.41, 23.42, 23.51, 23.52, 23.61, 23.62) and the rubber-like elements (26.1.1, 26.1.2, 26.2.1, 26.2.2, 26.3.1, 26.3.2, 26.4.1, 26.4.2, 26.5.1, 26.5.2, 26.6.1, 26.6.2) adjoining these are constructed so as to be ring segment-shaped.

11. Flexible coupling (1, 1.3) according to any of claims 1 to 10, **characterised in that** the other second coupling element (3, 4; 3.3, 4.3) comprises at least one hub part (12) and arm-like elements (13.1, 13.2, 13.3, 13.4, 13.5, 13.6) extending therefrom in the radial direction, the detachable connection between central part (9.1, 9.2, 9.3, 9.4, 9.5, 9.6) of the bearing block (5.1, 5.2, 5.3, 5.4, 5.5, 5.6) arranged in the first coupling element (4; 4.3) being made with the arm-like elements (13.1, 13.2, 13.3, 13.4, 13.5, 13.6).

12. Flexible coupling (1, 1.3) according to claim 11, **characterised in that** at least the hub part (6) and the arm-like elements (7.1, 7.2, 7.3, 7.4, 7.5, 7.6) of the first coupling element (4; 4.3) and/or the hub part (12) and the arm-like elements (13.1, 13.2, 13.3, 13.4, 13.5, 13.6) of the second coupling element (3; 3.3) consist of a metal material and the metal material is constructed as a weight-optimised metal alloy.

13. Flexible coupling (1.3), in particular bearing stack joint coupling (2; 2.3) according to any of claims 1 to 12, **characterised by** the following features:
comprising two coupling planes (E₁, E₂) connected one behind the other;
each coupling plane (E₁, E₂) is produced by two coupling elements, one respective coupling element of the first coupling plane being directly and non-rotatably connected to one coupling element of the second coupling plane and the other respective coupling elements of the individual coupling planes not non-rotatably connected to one another being connected to the drive and output side.

14. Flexible coupling (1.3) according to claim 13, **characterised in that** the non-rotatable connection of a coupling element of the first coupling plane to a coupling element of the second coupling plane is made owing to the arrangement of the two coupling elements on one intermediate shaft (36).

## Revendications

1. Accouplement élastique (1 ; 1.3), en particulier accouplement articulé multicouche (2 ; 2.3) avec au moins un plan d'accouplement (E₁), avec un premier élément d'accouplement (3 ; 3.3) et un deuxième élément d'accouplement (4 ; 4.3), destiné à l'accouplement au moins indirect avec un élément côté entraînement ou côté sortie ;
le premier élément d'accouplement (3 ; 3.3) ou le deuxième élément d'accouplement (4 ; 4.3) comprend au moins une partie de moyeu (6) avec des éléments en forme de bras (7.1, 7.2, 7.3, 7.4, 7.5, 7.6) s'étendant dans le sens radial ;
entre deux éléments en forme de bras (7.1, 7.2, 7.3, 7.4, 7.5, 7.6) agencés de manière contiguë dans le sens périphérique, il est chaque fois disposé un paquet de couches élastiques (5.1, 5.2, 5.3, 5.4, 5.5, 5.6) ;
chaque paquet de couches (5.1, 5.2, 5.3, 5.4, 5.5, 5.6) d'un élément d'accouplement - premier ou deuxième élément d'accouplement - comprend une pièce centrale (9.1, 9.2, 9.3, 9.4, 9.5, 9.6), qui vue en coupe dans le sens axial va en s'amincissant dans le sens radial au moins dans la zone de la périphérie intérieure (30) par rapport à l'axe d'accouplement (A), laquelle pièce peut être reliée de manière amovible avec l'autre élément d'accouplement - deuxième ou premier élément d'accouplement (3, 4 ; 3.3, 4.3) - et à laquelle se raccordent les blocs de couches élastiques vulcanisées, symétriquement sur les deux faces (21.1, 21.1.2, 21.2.1, 21.2,2, 21.31, 21.32, 21.41, 21.42, 21.51, 21.52, 21.61, 21.62) avec des parties d'extrémité placées vers l'extérieur (23.11, 23.12, 23.21, 23.22, 23.31, 23.32, 23.41, 23.42, 23.51, 23.52, 23.61, 23.62) qui peuvent être reliées de façon amovible avec l'élément en forme de bras (7.1, 7.2, 7.3, 7.4, 7.5, 7.6) ; les blocs de couches (21.1, 21.1.2, 21.2.1, 21.2.2, 21.31, 21.32, 21.41, 21.42, 21.51, 21.52, 21.61, 21.62) comprennent au moins deux éléments caoutchouteux (26.11, 26.12, 26.21, 26.22, 26.31, 26.32, 26.4.1, 26.42, 26.51, 26.52, 26.61, 26.62) avec entre eux
des éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2) ;
**caractérisé par** les dispositions suivantes :
la forme des blocs de couches (21.1, 21.1.2, 21.2.1, 21.2.2, 21.31, 21.32, 21.41, 21.42, 21.51, 21.52, 21.61, 21.62) présentant dans le sens périphérique des surfaces d'application ou de contact entre les différents éléments, est telle que les éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2) et les éléments caoutchouteux (26.11, 26.12, 26.21, 26.22, 26.31, 26.32, 26.41, 26.42, 26.51, 26.52, 26.61, 26.62) pratiquent un centrage automatique ;
les surfaces de contact de la pièce centrale (9.1, 9.2, 9.3, 9.4, 9.5, 9.6) et des éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2) vues en section dans le plan de l'accouplement ou vues en section sur leur étendue radiale, peuvent être décrites par au moins deux vecteurs directionnels différents ;
la pièce centrale (9.1, 9.2, 9.3, 9.4, 9.5, 9.6) présente vue en coupe une face latérale courbée vers l'extérieur et les éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2) sont réalisés vus en coupe dans le sens périphérique sous forme d'une demi-coque ;
les éléments caoutchouteux (26.1.1, 26.1.2, 26.2.1, 26.2.2, 26.3.1, 26.3.2, 26.4.1, 26.4.2, 26.5.1, 26.5.2, 26.6.1, 26.6.2) présentent selon une vue dans le sens périphérique ou perpendiculaire au sens axial, la forme d'un segment d'anneau de cercle ;
la pièce centrale (9.1, 9.2, 9.3, 9.4, 9.5, 9.6) prévue dans le premier ou le deuxième élément d'accouplement et le deuxième ou le premier élément d'accouplement (3,4, 3.3, 4.3) sont reliés mutuellement par complémentarité de formes ;
les moyens destinés à réaliser une liaison par complémentarité de formes entre pièce centrale et premier élément d'accouplement ou deuxième élément d'accouplement comprennent une liaison à ressort et rainure (16), la rainure ou le ressort étant affecté au premier élément d'accouplement.

2. Accouplement élastique (1 ; 1.3) selon la revendication 1, **caractérisé en ce que** les éléments caoutchouteux (26.1.1, 26.1.2, 26.2.1, 26.2.2, 26.3.1, 26.3.2, 26.4.1, 26.4.2, 26.5.1, 26.5.2, 26.6.1, 26.6.2) présentent, si l'on considère l'accouplement dans une projection sur l'agencement des différents éléments, vu dans le sens périphérique de l'accouplement, une largeur constante dans le sens radial.

3. Accouplement élastique (1 ; 1.3) selon la revendication 1, **caractérisé en ce que** les éléments caoutchouteux (26.1.1, 26.1.2, 26.2.1, 26.2.2, 26.3.1, 26.3.2, 26.4.1, 26.4.2, 26.5.1, 26.5.2, 26.6.1, 26.6.2), si l'on considère l'accouplement dans une projection sur l'agencement des différents éléments, vu dans le sens périphérique de l'accouplement, sont réalisés dans la zone de la périphérie extérieure (31) des blocs de couches, dans le sens radial, ouverts en forme de clavette ou en forme de clavette avec la grosse extrémité dans la zone de la périphérie extérieure.

4. Accouplement élastique (1 ; 1.3) selon l'une des revendications 1 à 3, **caractérisé en ce que** les éléments individuels de pièce centrale (9.1, 9.2, 9.3, 9.4, 9.5, 9.6) et/ou les éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2) et/ou les éléments caoutchouteux (26.1.1, 26.1.2, 26.2.1, 26.2.2, 26.3.1, 26.3.2, 26.4.1, 26.4.2, 26.5.1, 26.5.2, 26.6.1, 26.6.2) présentent, vus dans le sens axial, une section constante.

5. Accouplement élastique (1 ; 1.3) selon l'une des revendications 1 à 4, **caractérisé en ce que** la pièce d'extrémité (23.11, 23.12, 23.21, 23.22, 23.31, 23.32, 23.41, 23.42, 23.51, 23.52, 23.61, 23.62) lorsqu'on regarde l'accouplement sur une vue de l'agencement des différents éléments dans le sens périphérique de l'accouplement, présente une section au moins en forme de L ou en forme de U, où l'on affecte aux traverses placées dans un plan agencé dans le sens axial de l'accouplement, des moyens de réalisation de la liaison amovible entre les pièces d'extrémité (23.11, 23.12, 23.21, 23.22, 23.31, 23.32, 23.41, 23.42, 23.51, 23.52, 23.61, 23.62) et les éléments en forme de bras (7.1, 7.2, 7.3, 7.4, 7.5, 7.6).

6. Accouplement élastique (1 ; 1.3) selon la revendication 5, **caractérisé en ce que** les moyens de réalisation d'une liaison amovible comprennent des éléments de fixation (27.1.1, 27.1.2, 27.2.1, 27.2.2, 27.3.1, 27.3.2, 27.4.1, 27.4.2, 27.5.1, 27.5.2, 27.6.1 ; 27.6.2) agissant par action de forces.

7. Accouplement élastique (1 ; 1.3) selon l'une des revendications 1 à 6, **caractérisé en ce que** les moyens de réalisation d'une liaison amovible (11.1, 11.2, 11.3, 11.4, 11.5, 11.6) comprennent entre la pièce centrale (9.1, 9.2, 9.3, 9.4, 9.5, 9.6) présente dans le premier ou le deuxième élément d'accouplement et entre le deuxième ou le premier élément d'accouplement (3, 4 ; 3.3, 4.3), des moyens de réalisation d'une liaison par action de forces.

8. Accouplement élastique (1 ; 1.3) selon la revendication 7, **caractérisé en ce que** les moyens de réalisation d'une liaison par action de forces comprennent des éléments de fixation (10.1, 10.2, 10.3, 10.4, 10.5, 10.6) qui pénètrent dans la pièce centrale (9.1, 9.2, 9.3, 9.4, 9.5, 9.6) au moins de façon dirigée ou alors sont en relation active avec cette dernière par action de forces.

9. Accouplement élastique (1 ; 1.3) selon l'une des revendications 1 à 8, **caractérisé en ce que** les éléments caoutchouteux (26.11, 26.12, 26.21, 26.22, 26.31, 26.32, 26.41, 26.42, 26.51, 26.52, 26.61, 26.62) sont vulcanisés sur les éléments intermédiaires (25.1.1, 25.1.2, 25.2.1, 25.2.2, 25.3.1, 25.3.2, 25.4.1, 25.4.2, 25.5.1, 25.5.2, 25.6.1, 25.6.2).

10. Accouplement élastique (1 ; 1.3) selon l'une des revendications 1 à 9, **caractérisé en ce que** des surfaces d'application entre pièces d'extrémité (23.11, 23.12, 23.21, 23.22, 23.31, 23.32, 23.41, 23.42, 23.51, 23.52, 23.61, 23.62) et les éléments caoutchouteux (26.11, 26.12, 26.21, 26.22, 26.31, 26.32, 26.41, 26.42, 26.51, 26.52, 26.61, 26.62) contigus à cette dernière, se présentent sous forme de segments annulaires.

11. Accouplement élastique (1 ; 1.3) selon l'une des revendications 1 à 10, **caractérisé en ce que** l'autre élément d'accouplement, le deuxième (3.4, 3.3, 4) présente au moins une partie de moyeu (12) et des éléments en forme de bras (13.1, 13.2, 13.3, 13.4, 13.5, 13.6) s'étendant dans le sens radial en partant de cette dernière, la liaison amovible entre la pièce centrale (9.1, 9.2, 9.3, 9.4, 9.5, 9.6) du bloc de couches (5.1, 5.2, 5.3, 5.4, 5.5, 5.6) agencé dans le premier élément d'accouplement (4 ; 4.3) étant réalisée avec les éléments en forme de bras (13.1, 13.2, 13.3, 13.4, 13.5, 13.6).

12. Accouplement élastique (1 ; 1.3) selon la revendication 11, **caractérisé en ce qu'**au moins la partie de moyeu (6) et les éléments en forme de bras (7.1, 7.2, 7.3, 7.4, 7.5, 7.6) du premier élément d'accouplement (4 ; 4.3) et/ou la partie de moyeu (12) et
les éléments en forme de bras (13.1, 13.2, 13.3, 13.4, 13.5, 13.6) du deuxième élément d'accouplement (3 ; 3.3) sont constitués d'une matière métallique et la matière métallique est réalisée en un alliage métallique de poids optimal.

13. Accouplement élastique (1.3), en particulier accouplement articulé multicouche (2 ; 2.3) selon l'une des revendications 1 à 12, **caractérisé par** les dispositions suivantes :
deux plans d'accouplement sont montés à la suite l'un de l'autre (E₁, E₂) ;
chaque plan d'accouplement (E₁, E₂) est réalisé par deux éléments d'accouplement, où un élément d'accouplement du premier plan d'accouplement est respectivement relié solidaire en rotation directement avec un élément d'accouplement du deuxième plan d'accouplement et les autres éléments d'accouplement non solidarisés en rotation sont respectivement raccordés aux plans d'accouplement individuels avec les côtés entraînement et sortie.

14. Accouplement élastique (1.3) selon la revendication 13, **caractérisé en ce que** la liaison solidaire en rotation d'un élément d'accouplement du premier plan d'accouplement avec un élément d'accouplement du deuxième plan d'accouplement est produite par l'agencement des deux éléments d'accouplement sur un arbre intermédiaire (36).
